# EUROPEAN PATENT SPECIFICATION

(11) **EP 3 535 488 B1**
(45) Date of publication and mention of the grant of the patent: **16.06.2021**
(21) Application number: 17794894.0
(22) Date of filing: 30.10.2017
(51) Int. Cl.: F03D 1/06

(54) **SHEAR WEB FOR A WIND TURBINE BLADE**
HOLMSTEG FÜR EINE WINDTURBINENSCHAUFEL
ÂME DE CISAILLEMENT POUR UNE PALE D'ÉOLIENNE

(30) Priority: 01.11.2016 DK PA201670863
(43) Date of publication of application: 11.09.2019
(73) Proprietor: Vestas Wind Systems A/S, 8200 Aarhus N (DK)
(72) Inventor: WARDROPPER, Steve, New Milton Hampshire BH25 7AB (GB)
(74) Representative: Vestas Patents Department
(86) International application number: PCT/DK2017/050357
(87) International publication number: WO 2018/082755

(56) References cited:
- EP-A1- 2 679 804
- WO-A1-2010/065928
- WO-A1-2014/094780
- US-A- 1 403 444
- US-A1- 2007 217 918
- US-A1- 2013 209 728

## Description

### Technical Field

The present invention relates to a shear web for a wind turbine blade, and to an assembly tool and associated method for assembling the shear web.

### Background

Modern wind turbine blades typically comprise a hollow shell that defines an internal cavity of the blade. One or more reinforcing structures in the form of shear webs may be provided within the internal cavity. The shear webs extend longitudinally along the blade and are bonded between opposed inner surfaces of the blade shell.

The shear webs are typically moulded composite structures, which are formed in a dedicated shear web mould. The moulding process may involve arranging a number of fibre fabric layers and various other constituent materials in the mould to form a 'layup'. Resin is then admitted into the mould and infuses throughout the layup. The resin is cured by applying heat and pressure to the layup until the resin hardens and the resulting shear web is then removed from the mould.

The moulding process is time-consuming and technically challenging. Additional finishing processes may also be required after moulding, which adds further complexity, time and cost to the manufacturing process. Furthermore, if shear webs of different dimensions are required, then new moulds must be created. The significant cost and lead-time of creating new moulds generally prohibits varying the shear web design, and few manufacturing facilities would have sufficient floor space to accommodate multiple moulds of such large size.

During the moulding process, there is also a requirement to apply heat and pressure to the entire layup to cure the resin. As shear webs for modern utility-scale wind turbine blades are very large components, there is a significant energy cost associated with providing this heat and pressure across the entire structure. The large quantity of resin that is required also means that the material cost for a moulded shear web is relatively high.

EP2679804A1 describes an alternative design of shear web, which has a lattice structure. Such shear webs are advantageously lightweight yet strong, and do not need to be formed in moulds. However, one problem with such shear webs is that they can be relatively complicated to assemble since they are made up from a large number of individual parts, which are typically bolted together. The joints between the bolted parts may also be prone to loosening over time with bending and flexing of the shear web in use. These factors may explain why lattice shear webs have not been seen in large-scale production to date.

Against this background, there is a need for an improved lattice shear web and an associated assembly process that is both reliable and simple.

### Summary of the Invention

According to a first aspect of the invention, there is provided a shear web for a wind turbine. The shear web has a lattice structure comprising: a first longitudinal member defining a mounting flange and a first connection portion; a second longitudinal member defining a mounting flange and a second connection portion; a plurality of first bracing elements connected between the first and second connection portions; and a plurality of second bracing elements connected between the first and second connection portions. The connections between the bracing elements and the longitudinal members define a plurality of nodes. At one or more of the nodes, a connection portion of a longitudinal member is adhesively bonded between a first and a second bracing element.

Embodiments of the lattice shear web of the invention are advantageously lightweight and strong. Furthermore, the one or more adhesive bonds are advantageously reliable and durable over the lifetime of the shear web. Embodiments of the shear web of the invention are also relatively straightforward and quick to manufacture.

The first longitudinal member may be substantially identical to the second longitudinal member. The first bracing elements may be substantially identical to the second bracing elements. This reduces the number of different parts needed to assemble the shear web.

The longitudinal members and the bracing elements may be pultruded components. This allows the shear web components to be manufactured relatively easily and inexpensively.

At the one or more nodes, the first bracing element may be bonded to a first side of the connection portion; the second bracing element may be bonded to a second side of the connection portion. As such, at the one or more nodes, the connection portion may be located between said first and second bracing elements. This allows a clamping force to be applied to the bracing elements to ensure a strong adhesive bond.

The first and/or second longitudinal members may be substantially T-shaped in cross-section. The upstand of the T-shape may define the connection portion of the longitudinal member. The flange of the T-shape may define a mounting flange of the shear web.

The connection portion of the first and/or second longitudinal members may be provided with a plurality of apertures each located at a respective node. Each end of the first and second bracing elements may be provided with an aperture. At the one or more nodes, an aperture in the longitudinal member may be aligned with apertures in both the first and second bracing elements. This allows the shear web to be assembled accurately and relatively quickly.

The first and second bracing elements may be arranged diagonally relative to the longitudinal members. The bracing elements may be arranged in a truss structure. More specifically, the bracing elements may be arranged in a cross-bracing configuration. This contributes to the strength of the shear web.

According to another aspect of the invention, there is provided a wind turbine blade comprising a shear web as described above.

According to another aspect of the invention, there is provided a kit of parts for assembling together to form a shear web as described above. The kit comprises: a first longitudinal member; a second longitudinal member; and a plurality of bracing elements. The first and second longitudinal members are substantially T-shaped in cross-section.

According to another aspect of the invention, there is provided an assembly tool for assembling a wind turbine blade shear web having a lattice structure. The tool comprises: a first row of support elements mutually spaced apart in a longitudinal direction; and a second row of support elements mutually spaced apart in the longitudinal direction, the second row of support elements being spaced apart from the first row of support elements in a transverse direction. The first row of support elements is arranged to support a first longitudinal member of the lattice shear web. The second row of support elements is arranged to support a second longitudinal member of the lattice shear web. Each support element is further arranged to support one or more bracing elements of the shear web. Each support element comprises a clamping device configured to exert a clamping force between the longitudinal member and the one or more bracing elements when the longitudinal member and the one or more bracing elements are supported by the support element.

Each support element may comprise a location pin arranged to extend through mutually aligned apertures provided in the longitudinal members and bracing elements when supported on the tool. This allows a shear web to be arranged accurately on the assembly tool.

The clamping device may comprise a cylinder, in which case the location pin may be configured to extend and retract relative to the cylinder to effect clamping. A puck or such like may be located on a free end of the location pin to provide a clamping surface. Each support element may include a heating element.

The assembly tool may comprise a plurality of yokes, wherein each yoke extends transversely between a support element in the first row and a support element in the second row. The support elements may be movable in relation to their respective yokes.

The assembly tool may comprise a plurality of legs arranged to support the plurality of yokes above a foundation surface. The foundation surface may be a floor, wall or table. The foundation surface may comprise engagement features that allow the assembly tool to be arranged on the foundation surface according to one or more predefined footprints.

According to another aspect of the invention, there is provided a method of assembling the previously-described shear web using the assembly tool described above. The method comprises the following steps in any suitable order: arranging the plurality of first bracing elements on the assembly tool such that a first end of each first bracing element is supported by a support element in the first row of support elements and a second end of each first bracing element is supported by a support element in the second row of support elements; arranging the first and second longitudinal members on the assembly tool such that the first longitudinal member is supported by each of the support elements in the first row and the second longitudinal member is supported by each of the support elements in the second row; arranging the plurality of second bracing elements on the assembly tool such that a first end of each second bracing element is supported by a support element in the first row of support elements and a second end of each second bracing element is supported by a support element in the second row of support elements; applying adhesive between the longitudinal elements and the bracing elements; and operating the clamping device of each support element to exert a clamping force between the bracing elements and longitudinal members to connect the longitudinal members and bracing elements together.

This aspect of the invention advantageously provides a straightforward and quick manufacturing process for a lattice shear web.

The method may comprise maintaining the clamping force during curing of the adhesive. This ensures that the adhesive is appropriately compressed to provide a strong bond.

The method may comprise applying heat to the adhesive via heating devices integrated with the support elements. This accelerates the curing of the adhesive.

### Brief Description of the Drawings

In order that the invention may be more readily understood, an embodiment of the invention will now be described by way of non-limiting example with reference to the accompanying figures, in which:

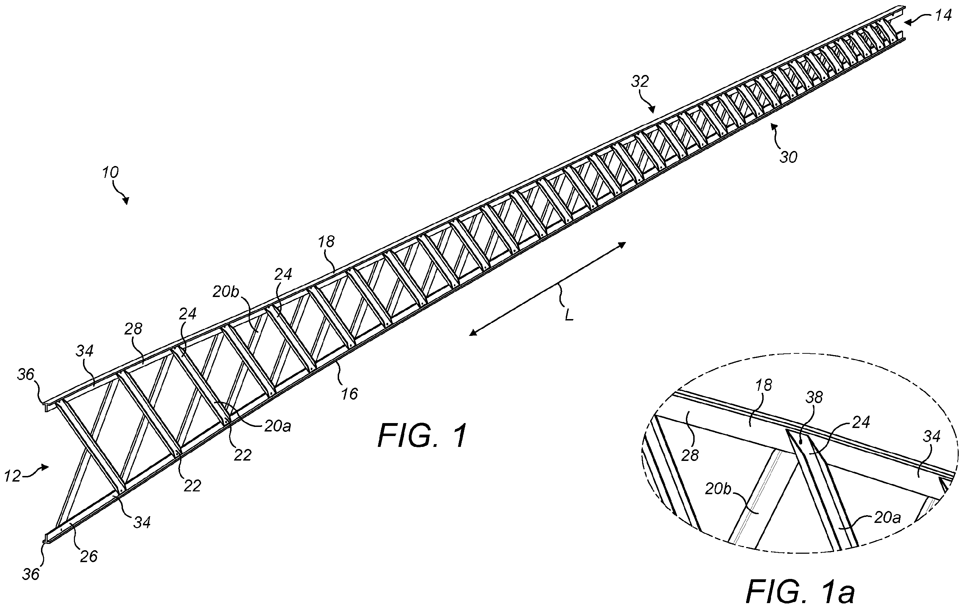

Figure 1 is a perspective view of a lattice shear web comprising two longitudinal members and a plurality of bracing elements;
Figure 1 a shows an enlarged view of a portion of the lattice shear web;
Figure 2 is a side view of the lattice shear web;
Figure 3 is a perspective view of an end portion of a longitudinal member of the lattice shear web shown in isolation;
Figure 4 is a perspective view of a bracing element of the lattice shear web shown in isolation;
Figure 4a is a plan view of the bracing element of Figure 4;
Figure 5 is a perspective view of a portion of an assembly tool which may be used in the manufacture of the lattice shear web;
Figure 6 shows a support element of the assembly tool;
Figure 7 shows a lattice shear web assembled on the assembly tool;
Figures 8a to 10c show a series of schematic cross-sectional views of the support element of the assembly tool illustrating steps involved in a method of making a lattice shear web, in which:

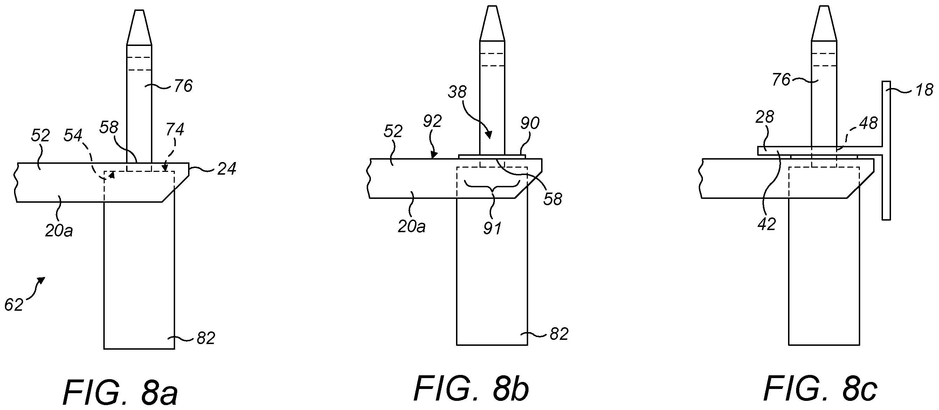

   Figures 8a to 8e illustrate part of the lattice shear web being assembled on the support element;

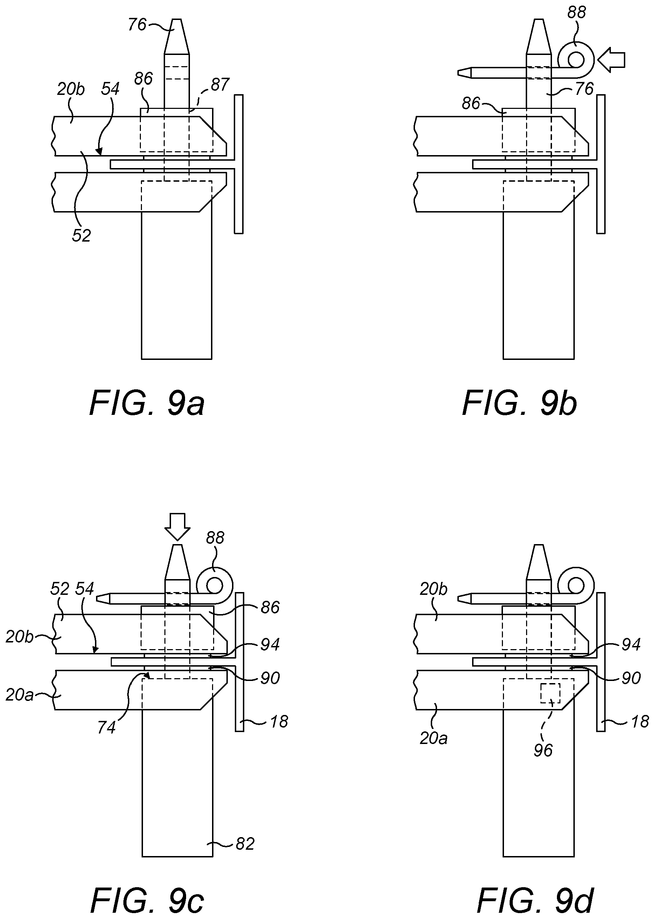

   Figures 9a to 9d illustrate a clamping and bonding process between the component parts of the lattice shear web; and

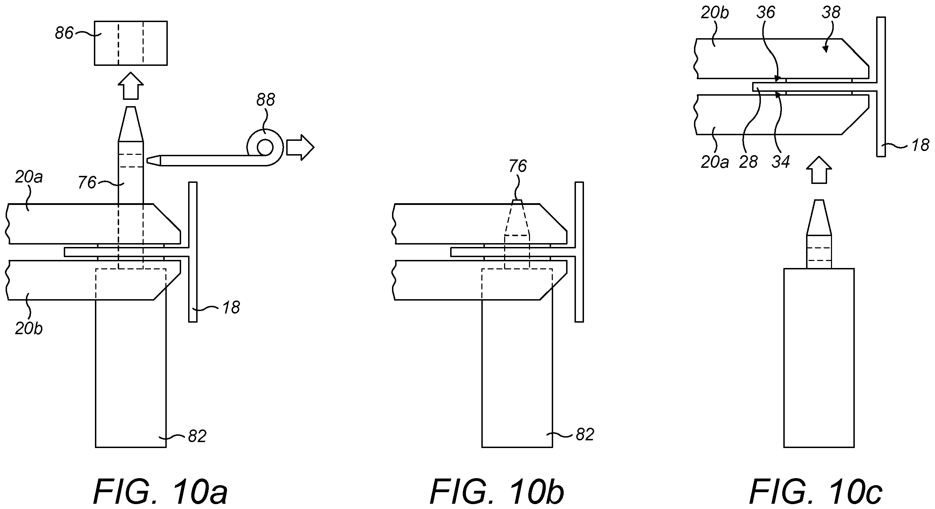

   Figures 10a to 10c illustrate the lattice shear web being removed from the assembly tool.

Referring to Figure 1, a lattice shear web 10 for a wind turbine blade is shown in perspective view. The shear web 10 extends in a longitudinal direction L between a root end 12 and a tip end 14. The shear web 10 has a lattice structure and comprises first and second substantially identical longitudinal members 16, 18 and a plurality of bracing elements, two of which are labelled 20a and 20b in Figure 1. The bracing elements 20a, 20b are connected between the longitudinal members 16, 18 in a truss structure. When installed in a blade, the longitudinal members 16, 18 of the shear web 10 are bonded to opposed inner surfaces of the blade shell and the bracing elements 20a, 20b bridge the internal cavity of the blade.

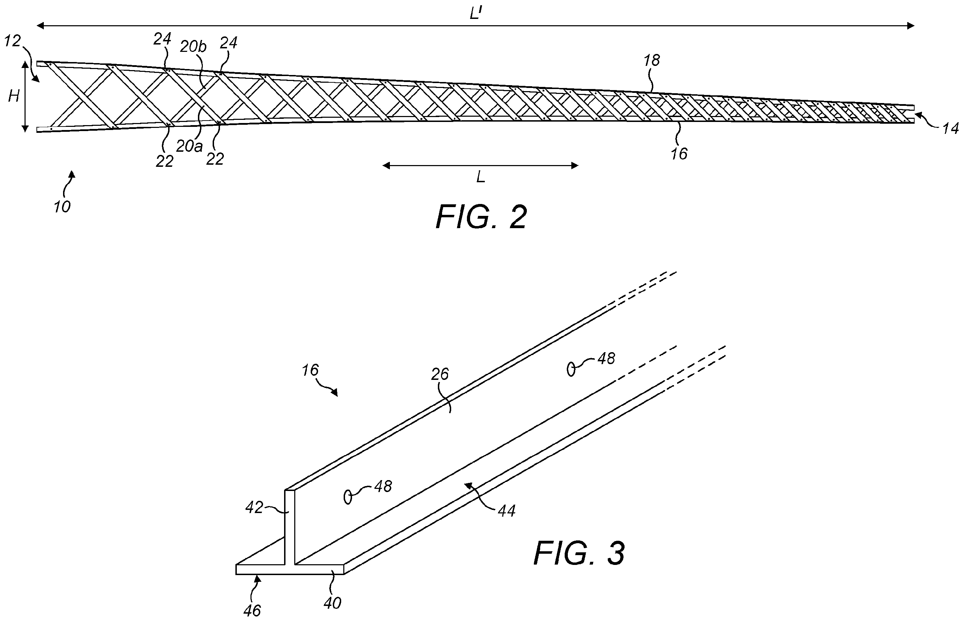

Referring to the side view of Figure 2, the longitudinal extension of the longitudinal members 16, 18 in the longitudinal direction L defines a length dimension L' of the lattice shear web 10. A height dimension H of the shear web 10 is defined by the perpendicular spacing between the two longitudinal members 16, 18.

It can be seen in Figure 2 that the shear web 10 decreases (tapers) in height progressively moving from the root end 12 to the tip end 14 of the shear web 10. The tapering height allows the shear web 10 to be accommodated within a wind turbine blade shell that tapers in height (thickness) moving from root to tip.

A principal plane of the shear web 10 is herein defined as a plane comprising the length and height dimensions L', H of the shear web 10, i.e. the plane of the page in Figure 2.

The bracing elements 20a, 20b of the shear web 10 extend between the longitudinal members 16, 18 in the principal plane of the shear web 10. In this example, the bracing elements 20a, 20b are arranged in a cross-bracing configuration. The bracing elements 20a, 20b are each arranged diagonally within the principal plane of the shear web 10. That is to say, the bracing elements 20a, 20b are arranged such that first and second ends 22, 24 of each bracing element 20a, 20b are spaced apart from one another in the longitudinal direction. In this example, the bracing elements 20a, 20b are arranged at approximately 45 degrees relative to longitudinal members 16, 18.

Each bracing element 20a, 20b is connected at its first end 22 to the first longitudinal member 16 and connected at its second end 24 to the second longitudinal member 18. The shear web 10 comprises two sets of bracing elements: a first set comprising a plurality of first bracing elements 20a and a second set comprising a plurality of second bracing elements 20b. Each first bracing element 20a is arranged diagonally substantially in the principal plane of the shear web 10 such that its first end 22 is closer to the tip end 14 of the shear web 10 than its second end 24 is. Conversely, each second bracing element 20b is arranged diagonally substantially in the principal plane of the shear web 10 such that its first end 22 is closer to the root end 12 of the shear web 10 than its second end 24 is. The first and second bracing elements 20a, 20b are therefore arranged in contrary diagonal directions. Pairs of first and second bracing elements 20a, 20b cross over as they extend between the longitudinal members 16, 18, forming X shapes in this example.

Referring again to Figure 1 and also to the detail view in Figure 1a, the first and second longitudinal members 16, 18 each comprise a connection portion 26, 28 to which the bracing elements 20a, 20b are connected. In particular, the first longitudinal member 16 comprises a first connection portion 26 and the second longitudinal member 18 comprises a second connection portion 28. The first end 22 of each bracing element 20a, 20b is connected to the first connection portion 26 and the second end 24 of each bracing element 20a, 20b is connected to the second connection portion 28.

In this example, the first bracing elements 20a are disposed on a first side 30 of the shear web 10, and the second bracing elements 20b are disposed on a second side 32 of the shear web 10, opposite the first side 30. The first and second sides 30, 32 of the shear web 10 may be defined by opposed first and second sides 34, 36 of the connection portions 26, 28. In this example, the first and second ends 22, 24 of the first bracing elements 20a are connected respectively to a first side 34 of the first connection portion 26 and to a first side 34 of the second connection portion 28. In contrast, the first and second ends 22, 24 of the second bracing elements 20b are connected respectively to a second side 36 of the first connection portion 26 and to a second side 36 of the second connection portion 28.

The connections between the longitudinal members 16, 18 and the bracing elements 20a, 20b define a plurality of nodes 38 of the lattice shear web 10. A node position 38 can be seen in the enlarged view of Figure 1a. At this node position 38, a first bracing element 20a and a second bracing element 20b are connected to the second connection portion 28. Specifically, a second end 24 of the first bracing element 20a is connected to the first side 34 of the second connection portion 28, whilst a second end 24 of a second bracing element 20b is connected to the second side 36 of the second connection portion 28. Accordingly, the connection portion 28 is located between the first and second bracing elements 20a, 20b. More specifically, the second connection portion 28 is sandwiched between the respective second ends 24 of the first and second bracing elements 20a, 20b.

As discussed in more detail later, the first and second bracing elements 20a, 20b are bonded to the connection portions 26, 28 at the nodes. For each node, with the exception of the nodes at the extreme ends 12, 14 of the shear web 10, the connection portions 26, 28 of the longitudinal members 16, 18 are bonded between a first and second bracing element 20a, 20b.

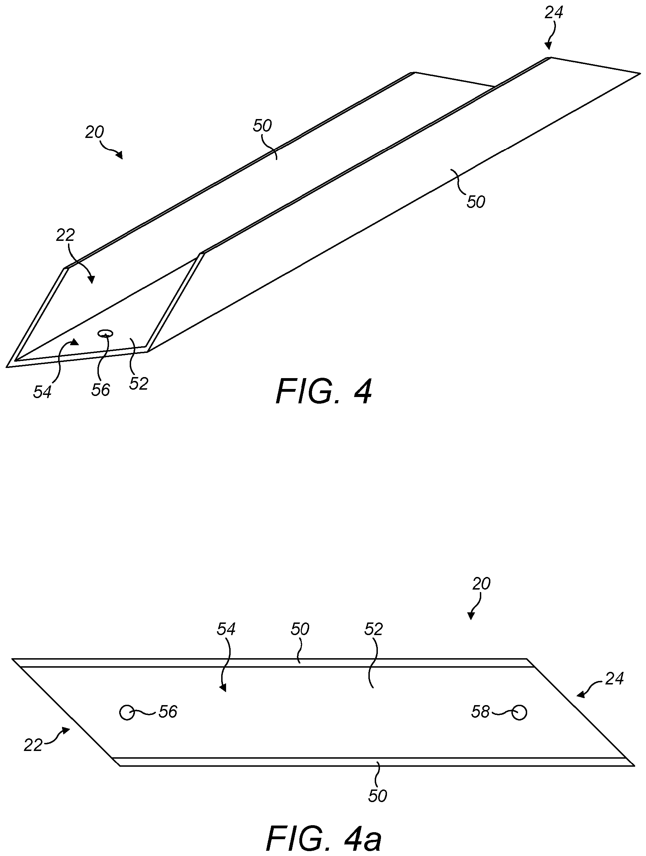

The components of the shear web 10 will now be described in more detail with reference to Figures 3, 4 and 4a.

Figure 3 shows a portion of a longitudinal member 16 in perspective view. In this embodiment, the first and second longitudinal members 16, 18 are substantially identical components. The longitudinal member 16 has a substantially T-shaped cross-section comprising a mounting flange 40 and an upstand 42. The upstand 42 projects from an inner surface 44 of the flange 40. The upstand 42 defines the connection portion 26 of the longitudinal member 16. An outer surface 46 of the flange 40 defines a bonding surface of the longitudinal member 16 which may be bonded to the inner surface of a blade shell when the lattice shear web 10 is installed in a wind turbine blade. The longitudinal member 16 in this example is of substantially constant cross section along its length.

As shown in Figure 3, a plurality of apertures 48 are provided in the connection portion 26 of the longitudinal member 16. In this example each aperture 48 is in the form of a circular hole. The apertures 48 are mutually spaced along the length of the longitudinal member 16. In this example the apertures 48 are evenly spaced at regular intervals along the length of the shear web 10. Each aperture 48 is provided at a node position 38. As will be described in more detail later, the apertures 48 are utilised during assembly of the lattice shear web 10 to locate the component parts of the shear web 10 accurately at the node positions 38.

Referring now to Figures 4 and 4a, a bracing element 20 is shown in perspective and plan views respectively. As shown in Figure 4a, the bracing element 20 in this example is in the form of a 'U-channel' or 'U-beam', and is an elongate structure having a substantially U-shaped cross-section, which is defined by a pair of legs or side-walls 50 extending from a flat base or intermediate portion 52. The intermediate portion 52 comprises inner and outer surfaces, of which only the inner surface 54 is visible in Figures 4a and 4b.

The bracing element 20 is of substantially constant cross-section along its length. As shown in the plan view of Figure 4b, the first and second ends 22, 24 of the intermediate portion 52 are angled such that intermediate portion 52 is shaped as a parallelogram in plan view. The side walls 50 extend perpendicularly from the intermediate portion 52. In this example, the side walls 50 are tapered at each end 22, 24 of the bracing element 20.

The first and second ends 22, 24 of the bracing element 20 each comprise a respective aperture 56, 58, which in this example is in the form of a circular hole. Specifically, a first aperture 56 is provided in the intermediate portion 52 at the first end 22 of the bracing element 20 and a second aperture 58 is provided in the intermediate portion 52 at the second end 24 of the bracing element 20. As will be described in more detail later, the apertures 56, 58 are utilised during assembly of the lattice shear web 10 to locate the component parts of the shear web 10 accurately at the node positions 38.

In this example, each of the bracing elements 20a, 20b of the lattice shear web 10 has the same general structure. The description above therefore applies to each bracing element 20a, 20b. However, it should be noted the lattice shear web 10 may comprise bracing elements 20a, 20b of different lengths to accommodate the varying or tapering height of the shear web 10, for example as shown in Figures 1 and 2.

Preferably, the longitudinal members 16, 18 and the bracing elements 20a, 20b may be formed from the same or similar materials and using the same or similar manufacturing techniques. The longitudinal members 16, 18 and/or the bracing elements 20a, 20b are preferably composite components, which are preferably formed from glass-fibre reinforced plastic (GFRP), but may alternatively or additionally include other reinforcing fibres, for example carbon fibres. Preferably the longitudinal members 16, 18 and/or the bracing elements 20a, 20b are pultruded components formed by pultrusion. To form the longitudinal members 16, 18, a pultrusion die having a T-shaped cross-section may be used, whilst to form the bracing elements 20a, 20b a pultrusion die having a U-shaped cross-section may be used.

The bracing elements 20a, 20b and longitudinal members 16, 18 may be cut to the required length as they emerge from the pultrusion die and optionally packed into kits ready for assembling into a lattice shear web 10. As all the bracing elements 20a, 20b may have the same cross-section, irrespective of their length, the process of manufacturing the component parts 16, 18, 20a, 20b of the shear web 10 is relatively straightforward. The apertures 48, 56, 58 in the various components 16, 18, 20a, 20b may be created inline with the pultrusion process or afterwards, for example by drilling or punching holes.

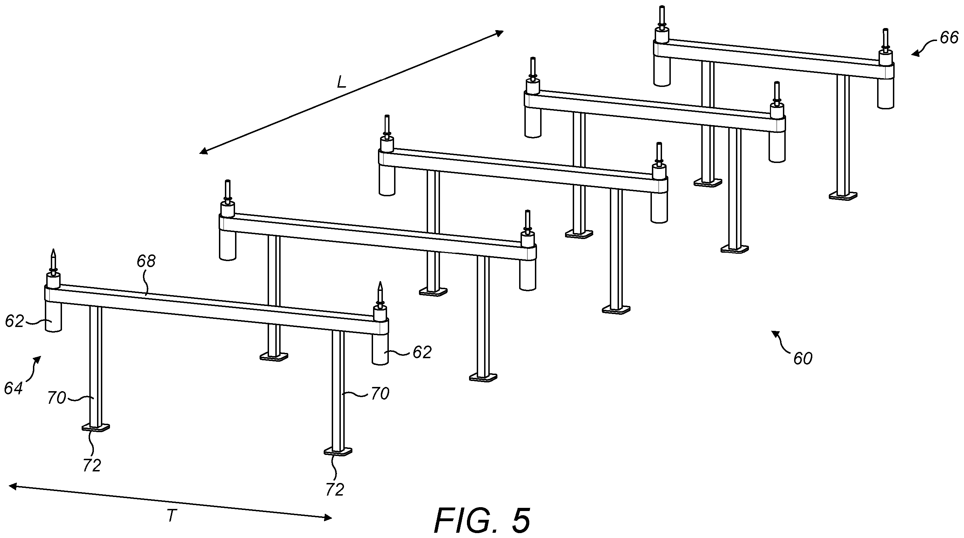

A process for manufacturing a shear web 10 in accordance with an example of the present invention will now be described with reference to Figures 5 to 10.

Figure 5 shows a portion of an assembly tool 60 that may be used in the assembly of the lattice shear web 10 from its component parts 16, 18, 20a, 20b. The assembly tool 60 is in the form of a jig and includes an array of support elements 62, two of which are labelled in Figure 5. In particular, the array comprises two longitudinally extending rows 64, 66 of support elements 62. Each row 64, 66 comprises a plurality of support elements 62 mutually spaced apart in the longitudinal direction L. The first and second rows 64, 66 are spaced apart from each other in a transverse direction T. In this example, the array of support elements 62 comprises a plurality of mutually opposed pairs of support elements 62, each pair comprising a support element 62 in the first row 64 and a corresponding support element 62 in the second row 66. Each pair of support elements 62 is spaced apart from an adjacent pair in a longitudinal direction L. As will be explained in more detail, each support element 62 corresponds to a node position 38 of the shear web 10.

The support elements 62 may be mounted on a frame structure. In this example, the frame structure comprises a plurality of yokes 68. Each yoke 68 extends in a transverse direction T between a mutually opposed pair of support elements 62. The corresponding support elements 62 are thus provided at either end of the yoke 68. Each yoke 68 is supported by a pair of substantially parallel legs 70 that may be secured to a suitable foundation surface such as a floor, table or wall. In this example, the legs 70 are provided with feet 72 that may be secured to the foundation surface.

The foundation surface may comprise engagement features that allow the assembly tool 60 to be arranged on the foundation surface according to one or more predefined footprints. The foundation surface may comprise a plurality of mounting points for the legs 70. The mounting points may comprise one or more threaded bores for receiving bolts (not shown) that extend through the feet 72 at the ends of the legs 70, although other means for securing the legs 70 to the foundation surface may be envisaged by the skilled person. If the foundation surface accommodates more than one predefined footprint then the assembly tool 60 can be arranged in more than one configuration (reconfigured) to allow shear webs of varying designs to be assembled using the assembly tool 60.

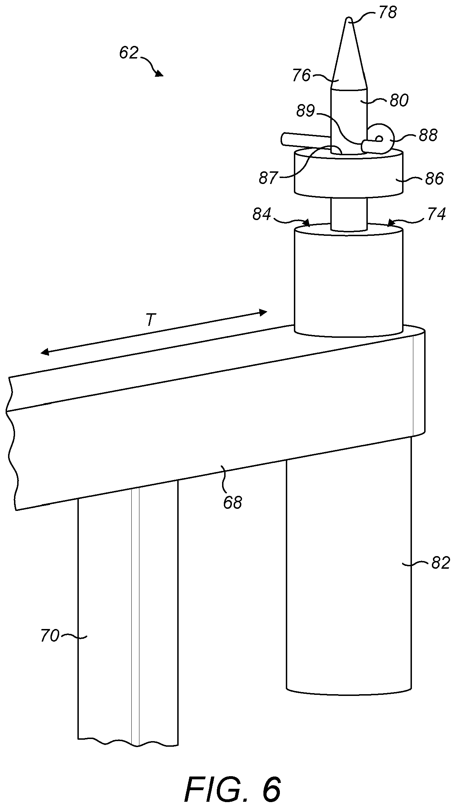

The support elements 62 will now be described in more detail with reference to Figure 6 which shows an enlarged view of a support element 62 of the assembly tool 60. Each support element 62 is substantially identical in this example.

As shown in Figure 6, the support element 62 comprises a support surface 74 and a location pin 76. The location pin 76 projects substantially perpendicularly from the support surface 74. In the orientation of the support element 62 shown in Figure 6, the location pin 76 projects upwardly from the support surface 74. The location pin 76 in this example has a tapered or chamfered end 78. As will be described in more detail later, the location pin 76 passes through the holes 48, 56, 58 provided in the respective component parts 16, 18, 20a, 20b when the parts 16, 18, 20a, 20b are arranged on the assembly tool 60. The chamfered end 78 facilitates insertion of the pin 76 through the respective holes 48, 56, 58.

The support element 62 in this example includes a piston 80 and cylinder 82 arrangement. An end surface 84 of the cylinder 82 defines the support surface 74. The location pin 76 is in the form of a piston rod 80 that extends and retracts relative to the cylinder 82. The piston 80 and cylinder 82 may be pneumatic or hydraulic. In other embodiments, a hand crank or electric motor may be used to extend or retract the location pin 76.

The support element 62 also comprises a puck 86. The puck 86 includes a through-bore 87 that allows the puck 86 to be inserted onto or removed from the location pin 76. The puck 86 is retained on the location pin 76 by a retaining pin 88, which is inserted through a hole 89 provided in the location pin 76. As will be described in more detail later, the piston 80, cylinder 82 and puck 86 arrangement together form a clamping device configured to exert a clamping force on the shear web components 16, 18, 20a, 20b when they are assembled on the assembly tool 60.

The support element 62 also preferably comprises a heating element (not shown). In this example, the heating element is integrated with the cylinder (as shown schematically in Figure 9d). The heating element may be integrated with the puck 86 and/or with the cylinder 82 and/or with the location pin 76, or it may be a separate device. The heating element is configured to apply heat to the shear web components 16, 18, 20a, 20b when they are arranged on the assembly tool 60.

In some examples, the support element 62 may be movable with respect to the frame of the assembly tool. For example, the support element 62 may be movable in a transverse direction T (see Figure 5) along a portion of the length of the yoke 68. This allows the assembly tool 60 to be adjusted to allow shear webs of different heights to be assembled on the assembly tool 60.

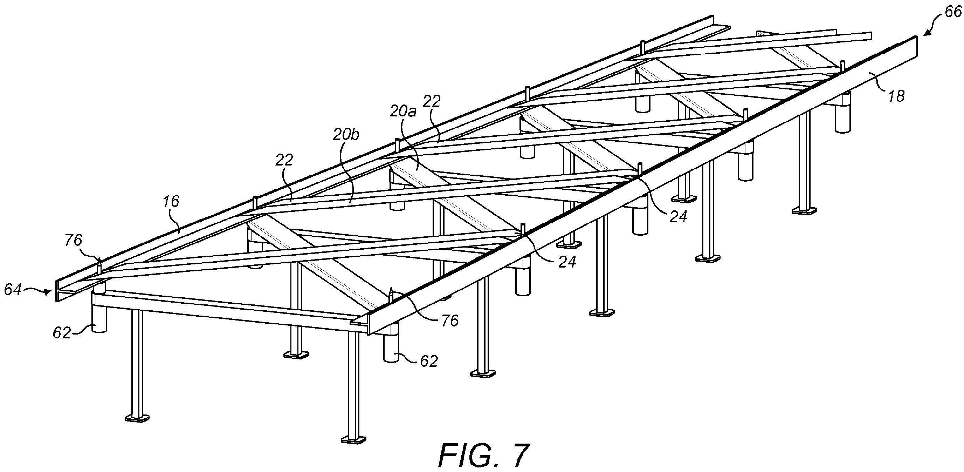

A method of making a lattice shear web 10 will now be described with reference to Figures 7 to 10.

Figure 7 shows a portion of the assembly tool 60 with the shear web components 16, 18, 20a, 20b arranged on the location pins 76. As will be discussed in more detail later, the process of assembling the shear web 10 initially involves arranging the first bracing elements 20a on the support elements 62 of the assembly tool 60. The first bracing elements 20a are arranged diagonally, such that each element 20a is supported by a pair of longitudinally spaced support elements 62: one in the first row 64 and one in the second row 66. Next, the two longitudinal members 16, 18 are arranged on the support elements 62. The first and second longitudinal members 16, 18 are supported by the first and second rows 64, 66 of support elements respectively. Thereafter, the second bracing elements 20b are arranged on the support elements 62, with each second bracing element 20b being arranged diagonally in an opposite direction to the first bracing elements 20a.

The shear web components 16, 18, 20a, 20b are arranged on the assembly tool 60 such that the location pins 76 of the support elements 62 extend through the mutually-aligned holes 48, 56, 58 defined in the connection portions 26, 28 of the longitudinal members 16, 18 and at the ends 22, 24 of the bracing elements 20a, 20b. Thus, each location pin 76 corresponds to a node position 38 of the shear web 10. The location pins 76 and holes 48, 56, 58 conveniently allow the shear web components 16, 18, 20a, 20b to be arranged quickly, simply and accurately on the assembly tool 60.

The shear web assembly process using the assembly tool 60 will now be discussed in more detail with reference to Figures 8a to 10c, which schematically show the component parts of the shear web 10 being assembled at one of the support elements 62 of the assembly tool.

Referring to Figure 8a, the support element 62 is initially arranged with its puck 86 removed and with its location pin 76 extending fully from the cylinder 82. A first bracing element 20a is then arranged on the assembly tool 60. The first bracing element 20a is arranged such that the location pin 76 extends through the hole 58 in one end 24 of the bracing element 20a. The inner surface 54 of the intermediate portion 52 of the first bracing element 20a lies against the support surface 74 of the cylinder 82. The other end (not shown) of the first bracing element 20a is similarly supported on another support element 62 in the adjacent row 64 of support elements 62 (see for example Figure 7).

Referring to Figure 8b, a layer of adhesive 90 is then applied to the outer surface 92 of the intermediate portion 52 of the first bracing element 20a at the node position 38. In this example, the adhesive 90 is applied to a region 91 surrounding the hole 58 through which the location pin 76 extends.

Referring to Figure 8c, a longitudinal member 18 is then arranged on the assembly tool 60. The longitudinal member 18 is arranged such that the location pin 76 extends through one of the holes 48 provided in the connection portion 28 of the longitudinal member 18, i.e. in the upstand 42 of the T in this embodiment. The longitudinal member 18 is similarly supported by each of the other support elements (not shown) in the same row (see for example Figure 7).

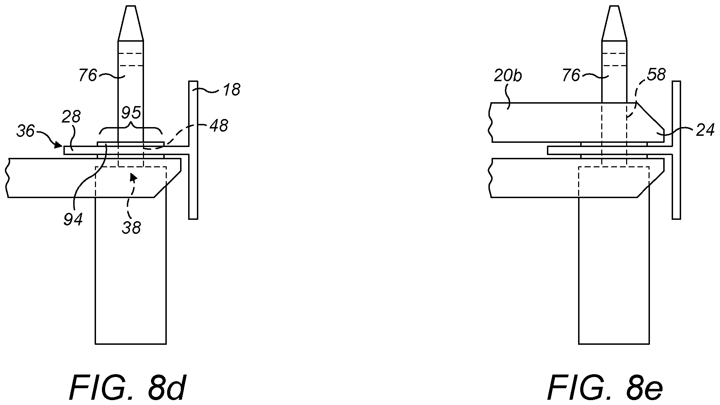

Referring to Figure 8d, a layer of adhesive 94 is then applied to the second surface 36 of the connection portion 28 of the longitudinal member 18 at the node position 38. The adhesive 94 is applied to a region 95 surrounding the hole 48 through which the location pin 76 extends.

Referring to Figure 8e, a second bracing element 20b is then arranged on the assembly tool 60. The second bracing element 20b is arranged such that the location pin 76 extends through the hole 58 in one end 24 of the bracing element 20b. The other end (not shown) of the second bracing element 20b is similarly supported on another support element 62 in the adjacent row 64 of support elements 62 (see for example Figure 7).

Once the lattice shear web components 16, 18, 20a, 20b have been assembled on the assembly tool 60, the layup is subjected to a clamping and curing process to integrate the various components 16, 18, 20a, 20b together, as illustrated by Figures 9a to 9d.

Referring to Figure 9a, the puck 86 is inserted on the location pin 76 such that the location pin 76 extends through the hole 87 in the centre of the puck 86. The puck 86 initially sits against the inner surface 54 of the intermediate portion 52 of the second bracing element 20b.

Referring to Figure 9b, the retaining pin 88 is then inserted through the location pin 76 to retain the puck 86 on the location pin 76.

Referring to Figure 9c, with the puck 86 and retaining pin 88 in place, the location pin 76 is then retracted relative to the cylinder 82. Retraction of the location pin 76 causes the retaining pin 88 to bear against the puck 86, and the puck 86 in turn bears against the inner surface 54 of the intermediate portion 52 of the second bracing element 20b. Accordingly, a clamping force is applied to the assembled components 20a, 18, 20b of the shear web 10 between the support surface 74 of the cylinder 82 and the puck 86. The clamping force serves to compress the adhesive 90, 94 applied between the respective components 20a, 18, 20b.

Referring to Figure 9d, with the clamping force maintained, the heating element 96 is optionally activated in order to apply heat to the shear web components 20a, 18, 20b to accelerate curing of the adhesive 90, 94. Under the pressure provided by the clamping device and the heat provided by the heating element 96, the adhesive 90, 94 is cured. This securely joins the components 20a, 18, 20b of the shear web 10 together.

After the adhesive 90, 94 has cured, the lattice shear web 10 is removed from the assembly tool 60, as illustrated by Figures 10a to 10c.

Referring to Figure 10a, the location pin 76 is extended from the piston cylinder 82 to relieve the clamping force on the shear web components 20a, 18, 20b. The retaining pin 88 and puck 86 are then removed from the location pin 76.

Referring to Figure 10b, the location pin 76 is then retracted again within the piston cylinder 82.

Then, as shown in Figure 10c, the lattice shear web 10 is removed from the assembly tool 60. At a plurality of nodes 38 of the completed shear web 10, the connection portion 28 of a longitudinal member 18 is bonded between first and second bracing elements 20a, 20b. A first bracing element 20a is bonded to a first side 34 of the connection portion 26, 28, and a second bracing element 20b is bonded to a second side 36 of the connection portion 28.

Variants of the support elements 62 are envisaged with longer location pins 76 allowing multiple shear webs 10 to be assembled simultaneously, one on top of another, on the same assembly jig 60.

It should be appreciated that although the description above refers to a single support element 62, the description is equally relevant to the other support elements 62 of the assembly tool 60. The processes described above may be carried out simultaneously or sequentially at each support element 62 as appropriate.

The lattice shear web 10 described above may advantageously be made from entirely pultruded components. Accordingly, the process of making the component parts 16, 18, 20a, 20b of the shear web is relatively straightforward and quick. The frequency, section, modulus, length etc. of the pultrusions can be altered easily by a straightforward adjustment of the pultrusion die, materials or pultrusion process to suit loads or to vary the dimensions of the shear web 10. The components 16, 18, 20a, 20b may be delivered as a kit of parts and assembled in the assembly jig 60 on site.

The joints between pultrusions are adhesive bonds, which are advantageously strong and durable over the lifetime of the shear web 10 and do not suffer from the problems of bolted joints. The process of manufacturing the shear web 10 is conveniently completely mouldless. The process advantageously allows discrete localised heating of the bond areas. The bond areas of the shear web 10 constitute a relatively small aggregate area of the shear web 10, and therefore there is a significant reduction in the heating requirements for curing in comparison to a moulded shear web where heating is required across the entire shear web.

The assembly jig 60 of the present invention enables the shear web 10 to be assembled from its component parts 16, 18, 20a, 20b rapidly. The process of making the shear web 10 using the jig 60 is considerably faster than the moulding process used to fabricate traditional shear webs. The assembly jig 60 may be reconfigured easily if the dimensions of the shear web 10 need to be varied. The assembly jig 60 can be arranged vertically or horizontally and packed away when not in use to free up floor space in the factory.

Many modifications may be made to the above examples without departing from the scope of the present invention as defined in the accompanying claims. For example, the number, design, position or orientation of the bracing elements 20a, 20b could be adjusted in dependence on the anticipated loads to be experienced by the shear web 10.

## Claims

1. A shear web (10) for a wind turbine, the shear web having a lattice structure comprising:
a first longitudinal member (16) defining a mounting flange (40) and a first connection portion (26);
a second longitudinal member (18) defining a mounting flange (40) and a second connection portion (28);
a plurality of first bracing elements (20a) connected between the first and second connection portions; and
a plurality of second bracing elements (20b) connected between the first and second connection portions,
the connections between the bracing elements and the longitudinal members defining a plurality of nodes (38),
**characterised in that**
at one or more nodes, a connection portion of a longitudinal member is adhesively bonded between a first and a second bracing element.

2. The shear web of Claim 1, wherein at the one or more nodes, the first bracing element is bonded to a first side (34) of the connection portion and the second bracing element is bonded to a second side (36) of the connection portion.

3. The shear web of any preceding claim, wherein the first and/or second longitudinal members are substantially T-shaped in cross-section.

4. The shear web of any preceding claim, wherein the first and second bracing elements are arranged diagonally relative to the longitudinal members.

5. A wind turbine blade comprising a shear web (10) as defined in any preceding claim.

6. A kit of parts for assembling together to form the shear web (10) of any of claims 1 to 4, wherein the kit comprises:
a first longitudinal member (16);
a second longitudinal member (18); and
a plurality of bracing elements (20a, 20b),
wherein the first and second longitudinal members are substantially T-shaped in cross-section.

7. An assembly tool (60) for assembling a wind turbine blade shear web (10) having a lattice structure, the tool comprising:
a first row (64) of support elements (62) mutually spaced apart in a longitudinal direction (L);
a second row (66) of support elements (62) mutually spaced apart in the longitudinal direction, the second row of support elements being spaced apart from the first row of support elements in a transverse direction (T);
the first row of support elements being arranged to support a first longitudinal member (16) of the lattice shear web; and
the second row of support elements being arranged to support a second longitudinal member (18) of the lattice shear web;
wherein each support element is further arranged to support one or more bracing elements (20a, 20b) of the shear web, and
wherein each support element comprises a clamping device (80, 82, 86) configured to exert a clamping force between the longitudinal member and the one or more bracing elements when the longitudinal member and the one or more bracing elements are supported by the support element.

8. The assembly tool of Claim 7, wherein each support element comprises a location pin (76) arranged to extend through mutually aligned apertures (48, 56, 58) provided in the longitudinal members and bracing elements when supported on the tool.

9. The assembly tool of Claim 7 or Claim 8, wherein the clamping device further comprises a cylinder (82) and the location pin is configured to extend and retract relative to the cylinder to effect clamping.

10. The assembly tool of any of Claims 7 to 9, wherein each support element includes a heating element (96).

11. The assembly tool of any of Claims 7 to 10, wherein the assembly tool further comprises a plurality of yokes (68), wherein each yoke extends transversely between a support element in the first row and a support element in the second row.

12. The assembly tool of Claim 11, further comprising a plurality of legs (70) arranged to support the plurality of yokes above a foundation surface such as a floor, wall or table.

13. A method of assembling the shear web (10) of any of Claims 1 to 4 using the assembly tool (60) of any of Claims 7 to 12, the method comprising the following steps in any suitable order:
arranging the plurality of first bracing elements (20a) on the assembly tool such that a first end (22) of each first bracing element is supported by a support element (62) in the first row (64) of support elements and a second end (24) of each first bracing element is supported by a support element in the second row (66) of support elements;
arranging the first and second longitudinal members (16, 18) on the assembly tool such that the first longitudinal member is supported by each of the support elements in the first row and the second longitudinal member is supported by each of the support elements in the second row;
arranging the plurality of second bracing elements (20b) on the assembly tool such that a first end of each second bracing element is supported by a support element in the first row of support elements and a second end of each second bracing element is supported by a support element in the second row of support elements;
applying adhesive (90, 94) between the longitudinal elements and the bracing elements; and
operating the clamping device (80, 82, 86) of each support element to exert a clamping force between the bracing elements and longitudinal members to connect the longitudinal members and bracing elements together.

14. The method of Claim 13, comprising maintaining the clamping force during curing of the adhesive.

15. The method of Claim 13 or Claim 14, comprising applying heat to the adhesive via heating devices integrated with the support elements.

## Patentansprüche

1. Steg (10) für eine Windkraftanlage, wobei der Steg eine Gitterstruktur aufweist, die umfasst:
ein erstes Längselement (16), das einen Montageflansch (40) definiert, und einen ersten Verbindungsabschnitt (26);
ein zweites Längselement (18), das einen Montageflansch (40) definiert, und einen zweiten Verbindungsabschnitt (28);
eine Vielzahl erster Verspannungselemente (20a), die zwischen dem ersten und dem zweiten Verbindungsabschnitt verbunden ist; und
eine Vielzahl zweiter Verspannungselemente (20b), die zwischen dem ersten und dem zweiten Verbindungsabschnitt verbunden ist,
wobei die Verbindungen zwischen den Verspannungselementen und den Längselementen eine Vielzahl von Knoten (38) definieren,
**dadurch gekennzeichnet, dass**
an einem oder mehreren Knoten ein Verbindungsabschnitt eines Längselements adhäsiv zwischen ein erstes und ein zweites Verspannungselement geklebt ist.

2. Steg nach Anspruch 1, wobei an dem einen oder den mehreren Knoten das erste Verspannungselement mit einer ersten Seite (34) des Verbindungsabschnitts zusammengeklebt ist, und das zweite Verspannungselement auf einer zweiten Seite (36) des Verbindungsabschnitts verbunden ist.

3. Steg nach einem vorstehenden Anspruch, wobei das erste und/oder das zweite Längselement im Wesentlichen im Querschnitt T-förmig ist.

4. Steg nach einem vorstehenden Anspruch, wobei das erste und das zweite Verspannungselement diagonal zu den Längselementen eingerichtet sind.

5. Windkraftanlagenblatt, das einen Steg (10) wie in einem vorstehenden Anspruch definiert umfasst.

6. Teilebausatz zum Fügen, um den Steg (10) nach einem der Ansprüche 1 bis 4 zu bilden, wobei der Bausatz umfasst:
ein erstes Längselement (16);
ein zweites Längselement (18); und
eine Vielzahl von Verspannungselementen (20a, 20b),
wobei das erste und das zweite Längselement im Wesentlichen im Querschnitt T-förmig sind.

7. Fügewerkzeug (60) zum Fügen eines Windkraftanlagenblattstegs (10), der eine Gitterstruktur aufweist, wobei das Werkzeug umfasst:
eine erste Reihe (64) von Tragelementen (62) die voneinander in eine Längsrichtung (L) beabstandet sind;
eine zweite Reihe (66) von Tragelementen (62), die voneinander in die Längsrichtung beabstandet sind, wobei die zweite Reihe von Tragelementen von der ersten Reihe von Tragelementen in eine Querrichtung (T) beabstandet ist;
wobei die erste Reihe von Tragelementen eingerichtet ist, um ein erstes Längselement (16) des Gitterstegs zu tragen; und
wobei die zweite Reihe von Tragelementen eingerichtet ist, um ein zweites Längselement (18) des Gitterstegs zu tragen;
wobei jedes Tragelement weiter eingerichtet ist, um ein oder mehrere Verspannungselemente (20a, 20b) des Stegs zu tragen, und
wobei jedes Tragelement eine Klemmvorrichtung (80, 82, 86) umfasst, die dazu konfiguriert ist, eine Klemmkraft zwischen dem Längselement und dem einen oder den mehreren Verspannungselementen auszuüben, wenn das Längselement und das eine oder die mehreren Verspannungselemente von dem Tragelement getragen werden.

8. Fügewerkzeug nach Anspruch 7, wobei jedes Tragelement einen Positionsstift (76) umfasst, der eingerichtet ist, um sich durch zueinander ausgerichtete Öffnungen (48, 56, 58), die in den Längselementen und Verspannungselementen bereitgestellt sind, zu erstrecken, wenn es auf dem Werkzeug getragen wird.

9. Fügewerkzeug nach Anspruch 7 oder 8, wobei die Klemmvorrichtung weiter einen Zylinder (82) umfasst, und der Positionsstift dazu konfiguriert ist, sich bezüglich des Zylinders auszustrecken und zurückzuziehen, um das Klemmen zu bewirken.

10. Fügewerkzeug nach einem der Ansprüche 7 bis 9, wobei jedes Tragelement ein Heizelement (96) umfasst.

11. Fügewerkzeug nach einem der Ansprüche 7 bis 10, wobei das Fügewerkzeug weiter eine Vielzahl von Bügeln (68) umfasst, wobei sich jeder Bügel quer zwischen einem Tragelement in der ersten Reihe und einem Tragelement in der zweiten Reihe erstreckt.

12. Fügewerkzeug nach Anspruch 11, das weiter eine Vielzahl von Beinen (70) umfasst, die eingerichtet ist, um die Vielzahl von Bügeln oberhalb einer Fundamentoberfläche, wie einem Boden, einer Wand oder einem Tisch, zu tragen.

13. Verfahren zum Fügen des Stegs (10) nach einem der Ansprüche 1 bis 4 unter Verwenden des Fügewerkzeugs (60) nach einem der Ansprüche 7 bis 12, wobei das Verfahren die folgenden Schritte in einer zweckdienlichen Reihenfolge umfasst:
Einrichten der Vielzahl erster Verspannungselemente (20a) auf dem Fügewerkzeug derart, dass das erste Ende (22) jedes ersten Verspannungselements von einem Tragelement (62) in der ersten Reihe (64) von Tragelementen getragen wird, und ein zweites Ende (24) jedes ersten Verspannungselements von einem Tragelement in der zweiten Reihe (66) von Tragelementen getragen wird;
Einrichten des ersten und des zweiten Längselements (16, 18) auf dem Fügewerkzeug derart, dass das erste Längselement von jedem der Tragelemente in der ersten Reihe getragen wird, und das zweite Längselement von jedem der Tragelemente in der zweiten Reihe getragen wird;
Einrichten der Vielzahl zweiter Verspannungselemente (20b) auf dem Fügewerkzeug derart, dass das erste Ende jedes zweiten Verspannungselements von einem Tragelement in der ersten Reihe von Tragelementen getragen wird, und ein zweites Ende jedes Verspannungselements von einem Tragelement in der zweiten Reihe von Tragelementen getragen wird;
Auftragen von Klebstoff (90, 94) zwischen den Längselementen und den Verspannungselementen; und
Betätigen der Klemmvorrichtung (80, 82, 86) jedes Tragelements, um eine Klemmkraft zwischen den Verspannungselementen und Längselementen auszuüben, um die Längselemente und die Verspannungselemente miteinander zu verbinden.

14. Verfahren nach Anspruch 13, das das Aufrechterhalten der Klemmkraft während des Aushärtens des Klebstoffs umfasst.

15. Verfahren nach Anspruch 13 oder Anspruch 14, das das Anlegen von Wärme an den Klebstoff über Heizvorrichtungen, die in die Tragelemente integriert sind, umfasst.

## Revendications

1. Toile de cisaillement (10) pour une éolienne, la toile de cisaillement présentant une structure en treillis comprenant :
un premier élément longitudinal (16) définissant une bride de montage (40) et une première portion de raccordement (26) ;
un second élément longitudinal (18) définissant une bride de montage (40) et une seconde portion de raccordement (28) ;
une pluralité de premiers éléments d'haubanage (20a) raccordés entre les première et seconde portions de raccordement ; et
une pluralité de seconds éléments d'haubanage (20b) raccordés entre les première et seconde portions de raccordement,
les raccordements entre les éléments d'haubanage et les éléments longitudinaux définissant une pluralité de nœuds (38),
**caractérisée en ce que**
au niveau d'un ou plusieurs nœuds, une portion de raccordement d'un élément longitudinal est liée de manière adhésive entre un premier et un second élément d'haubanage.

2. Toile de cisaillement selon la revendication 1, dans laquelle au niveau des un ou plusieurs nœuds, le premier élément d'haubanage est lié à un premier côté (34) de la portion de raccordement et le second élément d'haubanage est lié à un second côté (36) de la portion de raccordement.

3. Toile de cisaillement selon l'une quelconque des revendications précédentes, dans laquelle les premier et/ou second éléments longitudinaux sont sensiblement en forme de T en section transversale.

4. Toile de cisaillement selon l'une quelconque des revendications précédentes, dans laquelle les premier et second éléments d'haubanage sont agencés en diagonale par rapport aux éléments longitudinaux.

5. Pale d'éolienne comprenant une toile de cisaillement (10) selon l'une quelconque revendication précédente.

6. Kit de pièces destinées à être assemblées ensemble pour former la toile de cisaillement (10) selon l'une quelconque des revendications 1 à 4, dans lequel le kit comprend :
un premier élément longitudinal (16) ;
un second élément longitudinal (18) ; et
une pluralité d'éléments d'haubanage (20a, 20b),
dans lequel les premier et second éléments longitudinaux sont sensiblement en forme de T en section transversale.

7. Outil d'assemblage (60) pour l'assemblage d'une toile de cisaillement (10) de pale d'éolienne présentant une structure en treillis, l'outil comprenant :
une première rangée (64) d'éléments de support (62) espacés mutuellement dans une direction longitudinale (L) ;
une seconde rangée (66) d'éléments de support (62) espacés mutuellement dans la direction longitudinale, la seconde rangée d'éléments de support étant espacée de la première rangée d'éléments de support dans une direction transversale (T) ;
la première rangée d'éléments de support étant agencée pour supporter un premier élément longitudinal (16) de la toile de cisaillement en treillis ; et
la seconde rangée d'éléments de support étant agencée pour supporter un second élément longitudinal (18) de la toile de cisaillement en treillis ;
dans lequel chaque élément de support est en outre agencé pour supporter un ou plusieurs éléments d'haubanage (20a, 20b) de la toile de cisaillement, et
dans lequel chaque élément de support comprend un dispositif de serrage (80, 82, 86) configuré pour exercer une force de serrage entre l'élément longitudinal et les un ou plusieurs éléments d'haubanage lorsque l'élément longitudinal et les un ou plusieurs éléments d'haubanage sont supportés par l'élément de support.

8. Outil d'assemblage selon la revendication 7, dans lequel chaque élément de support comprend une broche d'emplacement (76) agencée pour s'étendre à travers des ouvertures alignées mutuellement (48, 56, 58) prévues dans les éléments longitudinaux et les éléments d'haubanage lorsqu'ils sont supportés sur l'outil.

9. Outil d'assemblage selon la revendication 7 ou la revendication 8, dans lequel le dispositif de serrage comprend en outre un cylindre (82) et la broche d'emplacement est configurée pour s'étendre et se rétracter par rapport au cylindre pour effectuer le serrage.

10. Outil d'assemblage selon l'une quelconque des revendications 7 à 9, dans lequel chaque élément de support inclut un élément de chauffage (96).

11. Outil d'assemblage selon l'une quelconque des revendications 7 à 10, dans lequel l'outil d'assemblage comprend en outre une pluralité d'étriers (68), dans lequel chaque étrier s'étend transversalement entre un élément de support dans la première rangée et un élément de support dans la seconde rangée.

12. Outil d'assemblage selon la revendication 11, comprenant en outre une pluralité de branches (70) agencées pour supporter la pluralité d'étriers au-dessus d'une surface de fondation telle qu'un sol, une paroi ou une table.

13. Procédé d'assemblage de la toile de cisaillement (10) selon l'une quelconque des revendications 1 à 4 en utilisant l'outil d'assemblage (60) selon l'une quelconque des revendications 7 à 12, le procédé comprenant les étapes suivantes dans tout ordre adapté :
l'agencement de la pluralité de premiers éléments d'haubanage (20a) sur l'outil d'assemblage de sorte qu'une première extrémité (22) de chaque premier élément d'haubanage soit supportée par un élément de support (62) dans la première rangée (64) d'éléments de support et qu'une seconde extrémité (24) de chaque premier élément d'haubanage soit supportée par un élément de support dans la seconde rangée (66) d'éléments de support ;
l'agencement des premier et second éléments longitudinaux (16, 18) sur l'outil d'assemblage de sorte que le premier élément longitudinal soit supporté par chacun des éléments de support dans la première rangée et que le second élément longitudinal soit supporté par chacun des éléments de support dans la seconde rangée ;
l'agencement de la pluralité de seconds éléments d'haubanage (20b) sur l'outil d'assemblage de sorte qu'une première extrémité de chaque second élément d'haubanage soit supportée par un élément de support dans la première rangée d'éléments de support et qu'une seconde extrémité de chaque second élément d'haubanage soit supportée par un élément de support dans la seconde rangée d'éléments de support ;
l'application d'adhésif (90, 94) entre les éléments longitudinaux et les éléments d'haubanage ; et
l'actionnement du dispositif de serrage (80, 82, 86) de chaque élément de support pour exercer une force de serrage entre les éléments d'haubanage et les éléments longitudinaux pour raccorder les éléments longitudinaux et les éléments d'haubanage ensemble.

14. Procédé selon la revendication 13, comprenant le maintien de la force de serrage pendant le durcissement de l'adhésif.

15. Procédé selon la revendication 13 ou la revendication 14, comprenant l'application de chaleur à l'adhésif via des dispositifs de chauffage intégrés aux éléments de support.
